# EUROPEAN PATENT APPLICATION

(11) **EP 4 685 268 A1**
(43) Date of publication of application: **28.01.2026**
(21) Application number: 24191035.5
(22) Date of filing: 26.07.2024
(51) Int. Cl.: C25B 1/04, C25B 9/17, C25B 9/65, C25B 11/02, C25B 11/036, C25B 15/00, C25B 15/08, B25C 1/00

(54) **GAS GENERATOR FOR A WORKING TOOL AND A WORKING TOOL WITH A GAS GENERATOR**

(71) Applicant: Hilti Aktiengesellschaft, 9494 Schaan (LI)
(72) Inventor: Schmid, Florian, 9470 Buchs SG (CH); Dittrich, Tilo, 6800 Feldkirch (AT)
(74) Representative: Hilti Aktiengesellschaft Corporate Intellectual Property

(57) **Abstract**

The invention discloses a gas generator for a working tool, comprising an electrolysis cell (150), an electrolyte, a first electrode and a second electrode, said first electrode and said second electrode are separated by at least one electrically non-conductive separator. Further, the at least one electrically non-conductive separator is connected to a wick and the first electrode is connected to a first busbar and the second electrode is connected to a second busbar.
A working tool (591), comprising such gas generator is also described.

## Description

The present invention relates to gas generator for a working tool according to claim 1 and a working tool with said gas generator according to claim 15.

Various embodiments of the present invention concern a gas generator for a working tool. Typical, said working tool is a handheld one, specifically a handheld nail setting tool. The usual energy sources for handheld tools include an electric power cord, a battery, a gas can, a powder cartridge, or air pressure. At a construction site, a portable working tool can be used in a variety of ways, frequently overhead of the user, and after usage, it is simply placed away by the user. As a result, during use, said portable tool rapidly and frequently alters its spatial orientation.

### Background of the Invention

For stationary uses like welders and flame polishers, gas generators are well recognized. Hydrogen and oxygen gas bubbles are produced during the electrolysis of water, and these bubbles must be separated from the aqueous electrolyte. In stationary applications, gas and liquid are typically separated by gravity; that is, bubbles rise to the liquid's surface and gas is collected above the liquid surface. However, this method is impractical for hand-held instruments since gravity direction can no longer be taken for granted.

RU 2 475 343 C1 discloses an electrolysis cell. The electrolysis cell consists of flat or shaped parallel electrodes with holes of slots making gas and electrolyte passages. The space between electrodes is filled with an electrolyte, while electric current is supplied externally. Said electrodes are interconnected by current conducting buses to make sets. The central electrodes of every said set with 2n+1 electrodes are located between two adjacent sets, while other 2n electrodes of this set are arranged at the centre of the gap between electrodes of adjacent sets with contact with said buses. Thus, a compact electrolysis cell is provided.

US 4,081,656 A discloses a welding apparatus comprising an electrolysis cell for generating hydrogen and oxygen for industrial applications, being used to perform different types of welding operations based on the utilisation of hydrogen and oxygen. The electrolysis cell contains two plate electrodes immersed in an electrolyte consisting of a solution of KOH in water and connectable through terminals respectively to a source of AC or DC electricity. The source of electricity is a transformer connected to the cell through a bridge rectifier. A flash-back arrestor is constituted by a water bath in which gas liberated in the electrolysis cell passes through a tube into the water bath and thence through a tube to the burner.

A disadvantage of these disclosures is, that they are consociated for welding processes and industrial applications and are not suitable for a tool, especially not for a handheld tool.

WO 2005/023709 A2 discloses a power-driven tool, utilizing hydrogen from a tank, which was filled by a stationary gas generator comprising an electrolysis cell. The gas generator includes a base housing in which a switch that controls the flow of line voltage to the voltage rectifier and a microprocessor are located. The voltage rectifier supplies DC voltage to the anode and cathode located in the containment vessel fitted into the base housing. The cylindrical chamber in the containment vessel is divided into generally semi-cylindrical chambers by a non-permeable divider that allows the liquid to flow freely in the bottom portion of the containment vessel for the free flow of electrons between the anode and the cathode. This non-permeable divider prevents gas migration once separation has occurred. Located in the chamber is the cathode which, when activated, generates hydrogen from the water in the chamber. When sufficient hydrogen gas is produced by the cathode the liquid level in chamber will be reduced and the liquid level indicator will send a signal to the microprocessor to activate the compressor. The hydrogen gas from the low-pressure hose is compressed in the compressor and hydrogen gas under a high-pressure flows from the compressor into the top of a tank. The tank filled with hydrogen gas under pressure can be removed from the gas generator and used as a source of fuel for any number of mechanisms, including the lawnmower, nail setters, and portable power tool system for operating saws, drills.

A disadvantage of the disclosure is, that the stationary gas generator is a heavy and clunky stand-alone hydrogen generator with a complex setup, which fills a tank with compressed hydrogen.

US 7,168, 603 B1 discloses a power-driven tool, utilizing hydrogen gas from a gas generator for driving a moveable tooling. Said gas generator is arranged in the tool housing and comprises an electrolysis cell, whereby said electrolysis cell comprises at least one electrode pair disposed in an aqueous electrolyte solution. A disadvantage of the disclosure is, that said electrolyte can flow out of the gas generator when the tool orientation is inverted.

Another embodiment of the gas generator in US 7,168, 603 B1 uses a chemical reaction of an aqueous solution of sodium borohydride to produce hydrogen gas. Said gas generator comprises a hydrophobic membrane at the gas outlet. Said hydrophobic membrane exploits the negative bubble-point pressure of a porous hydrophobic structure for liquid separation. A disadvantage of the disclosure is, that the liquid separation only works reliably, when the membrane is only partially covered with liquid. If the membrane is completely covered with liquid and the differential pressure is large enough, then the liquid separation fails, and liquid penetrates through the hydrophobic membrane. This could happen if, for example, the tool orientation is inverted. The liquid separation can also fail if the tool is subject to high accelerations, which happens regularly during operation of nail setting tools.

The not yet published patent application EP23174619.9 discloses a gas generator for a tool comprising an electrolysis cell for producing oxyhydrogen gas in a cavity and an electrode pair with a first electrode and a second electrode. Said first electrode and said second electrode are separated by a non-conductive separator in said cavity. A gas extraction tube is arranged in the cavity. Furthermore, said invention disclose a usage of such a gas generator in a tool and a tool with such a gas generator.

In capillary-fed electrolysis cells the capillary flow of electrolyte is insufficient to provide adequate means of convective cooling. Thus, the cooling of capillary-fed electrolysis cells is dominated by heat conduction of the cells. Some of the cell designs disclosed in EP23174619.9 feature an unfavorable heat conductivity, which limits their maximum continuous gas production rate.

### Summary of the Invention

An object of the present invention is to overcome at least one of the disadvantages of the prior art. It is further an object of the present invention to provide a gas generator for a working tool, especially a handheld tool, comprising an electrolysis cell, which constantly operates independent on its spatial orientation and has an increased gas production rate.

At least one of these objects has been solved by the features of the independent patent claims. Other preferred embodiments are indicated in the dependent claims.

In a first aspect of the present disclosure, the object is achieved by a gas generator for a working tool, comprising an electrolysis cell, an electrolyte, a first electrode and a second electrode, said first electrode and said second electrode are separated by at least one electrically non-conductive separator. The at least one electrically non-conductive separator is connected to a wick and the first electrode is connected to a first busbar and the second electrode is connected to a second busbar. The constant operation of such a gas generator, independent of its spatial orientation, makes it particularly appropriate for a working tool, especially for a handheld tool.

Without losing the electrolyte, a tool in use can change its spatial orientation permanently. Because of its advantageous design, the gas generator does not lack any liquid electrolyte. Said electrolyte is preferably a liquid electrolyte, like e.g. water or other alkaline liquids or water-based liquids, and may comprise at least an additive e.g., KOH (potassium hydroxide) or NaOH (sodium hydroxide). Such a liquid electrolyte is inexpensive and provides a wide operating temperature range of -50 °C to 110 °C, especially in a 30 weight% KOH solution with water. Here the mass fraction between said additive and said electrolyte is relevant, e.g., 1 kg electrolyte with 30 weight% demands 0.3 kg KOH and 0.7 kg water.

KOH is added preferably between 15 to 45 weight% to the electrolyte in the electrolysis cell, and alternatively NaOH is added preferably between 10 to 25 weight% to the electrolyte in the electrolysis cell. At these concentrations, the freezing point of the electrolyte is below - 10 °C. To improve water separation, a suitable defoamer can be added to the electrolyte.

The generated gas is a mixture of oxygen and hydrogen gas, called oxyhydrogen gas, produced in said electrolysis cell. Oxyhydrogen gas is produced in said electrolysis cell, when the first electrode and the second electrode are electrically supplied by an electric supplier, like a battery. A DC-DC converter may be used for load regulation in said electrolysis cell. Advantageously said electric supply is a current supply providing a desirable current for operating said at least one electrolysis cell.

The at least one electrically non-conductive separator between the first electrode and the second electrode is made from a non-conductive and porous material. The at least one electrically non-conductive separator absorbs and distributes the electrolyte in the electrolysis cell by means of capillary action. Said cavity comprises said first electrode, said non-conductive separator and said second electrode entirely.

Preferably said electrodes of said electrode pair are made of nickel. Thus, increased electrolysis efficiencies, larger than 60%, are achieved. Furthermore, said electrodes may comprise a metal sheet, a metal wire mesh, e.g., a plain weave or a metal fibre fleece. A practical and economical electrode is a sheet made of nickel. For example, nickel, nickel alloy or stainless steel sheet or wire mesh would be useful.

In an advantageous embodiment said wick is non-conductive and porous and distributes the electrolyte to the at least one electrically non-conductive separator. The wick is directly connected to the at least one electrically non-conductive separator and distributes the electrolyte along a longitudinal axis of the electrolyte cell to the at least one electrically non-conductive separator.

The technical effect of said advantageous embodiment is, that only one source of the electrolyte is needed, e.g. the water inlet of the electrolysis cell, and the wick distributes the electrolyte to every location within the electrolysis cell, so that electrolysis can occur.

In an advantageous embodiment said first electrode and said second electrode comprise a disc-shaped structure and form a stack in said cavity, where said disc-shaped structure comprises a void in the centre of its structure. Said first electrode and said second electrode are separated by the non-conductive separator. Said first electrode and said second electrode are arranged on an individual disc. Several individual disks are stacked on top of each other, with a non-conductive separator sandwiched between adjacent discs in each case. This electrode-separator structure allows the operation gas to flow in radial direction to the void in the centre of the electrolysis cell.

For example, a series connection of many flat, disc-shaped cells is used. An advantage is the low cell current for a given gas generation rate due to the large number of cells.

In an advantageous embodiment said first busbar is electrically connected to the first electrode, wherein the first busbar and the first electrode form an anode and said second busbar is electrically connected to the second electrode, wherein the second busbar and the second electrode form a cathode. The technical effect of said advantageous embodiment is, that all first electrodes may be connected in parallel, and all second electrodes may be connected in parallel.

For example, an electrolysis cell consisting of many electrodes connected in parallel and stacked on top of each other as several individual discs with a separator in between. The electrodes are each displaced in the radial direction so that the electrodes can be easily contacted with said first or second busbar. This electrolysis cell has the advantage of good thermal conductivity.

In an advantageous embodiment said first electrode comprises at least one first protrusion and said second electrode comprises at least one second protrusion. The technical effect of said advantageous embodiment is, that the electrodes are each elongated in the radial direction so that the electrodes can be easily contacted with said first or second busbar. This electrolysis cell has the advantage of good thermal conductivity.

In an advantageous embodiment said at least one first protrusion extends radially along an outer diameter of the first electrode and said at least one second protrusion extends radially along an outer diameter of the second electrode, wherein the first protrusion and the second protrusion extends radially along an angle of at least of:
a. 44°,
b. 50°,
c. 55°,
d. 60°,
e. 65°,
f. 70°,
g. 75°,
h. 80°,
i. 85°,
j. 89°.

An angle of 44° provides the possibility that up to eight busbars can be used to electrically connect the first electrodes with each other and the second electrodes with each other. In that case, four first busbars are connected with the first electrodes and four second busbars are connected with the second electrodes. With eight busbars each are in contact with a first or a second electrode through a first or second protrusion which extends radially of the first or second electrode along an angle of 44°. Next to every busbar a wick is placed which covers 1° along an outer diameter of the first electrode or along an outer diameter of the second electrode.

An angle of 89° provides the possibility that up to four busbars can be used to electrically connect the first electrodes with each other and the second electrodes with each other. In that case, two first busbars are connected with first electrodes and two second busbars are connected with second electrodes. With four busbars each are in contact with a first or a second electrode through a first or second protrusion which extends radially of the first or second electrode along an angle of 89°. Next to every busbar a wick is placed which covers 1° along an outer diameter of the first electrode or along an outer diameter of the second electrode.

An angle of 179° is also feasible and would provide the possibility that up to two busbars can be used to electrically connect the first electrodes with each other and the second electrodes with each other. In that case, one first busbar is connected with the first electrodes and one second busbar is connected with the second electrodes. With two busbars each are in contact with a first or a second electrode through a first or second protrusion which extends radially of the first or second electrode along an angle of 179°. Next to every busbar a wick is placed which covers 1° along an outer diameter of the first electrode or along an outer diameter of the second electrode. This advantageous embodiment provides excellent heat conductivity through the electrodes and busbars into the housing of the gas generator.

In an advantageous embodiment one first protrusion and said at least one second protrusion do not overlap along a longitudinal axis of the electrolysis cell. The technical effect of said advantageous embodiment is, that in that case only the protrusions of the first electrode do overlap with each other and the protrusions of the second electrode do overlap with each other. In such a constellation only the protrusions of one certain electrode type, e.g. first electrode or second electrode, can be electrically connected. Hence, a wrong electrical connection is avoided.

In an advantageous embodiment said first electrode and/or said second electrode comprises an involute groove structure or a radial groove structure. The technical effect of said advantageous embodiment is, that with the involute groove structure or the radial groove structure, resulting gas bubbles at the electrodes are channelled and the area between the grooves remains available for electrolysis. In other words, the electrodes cannot be blocked by resulting gas bubbles. As an effect an involute groove structure or a radial groove structure leads to a higher efficiency and a higher power density of the gas generator.

In an advantageous embodiment said cavity comprises a gas extraction tube. The gas extraction tube is used to extract the operation gas from the cavity while also preventing the electrolyte from leaking out of the cavity. The constant operation of such a gas generator, independent of its spatial orientation, makes it particularly appropriate for a working tool, especially for a handheld tool. Without losing the electrolyte, a working tool in use can change its spatial orientation permanently. Because of its advantageous design, the gas generator does not lack any liquid electrolyte.

In another embodiment said gas extraction tube is connected to an opening of said cavity. Without any leakages, said gas extraction tube transports the operation gas from the cavity to a tool's combustion chamber.

Preferably said gas extraction tube is connected to an opening of one of a first electrode contact or of a second electrode contact. The operation gas is collected and compressed in the cavity and exhausted from the gas extraction tube through said opening of the first electrode contact or the second electrode contact. Said electrode contacts electrically contact respectively the first electrodes and the second electrode with an electric supplier, like a battery. Said electrode contacts make electrical connections with an electric supplier, such as said battery, to the first and second electrodes, respectively. The first electrode thus serves as an anode, and the second electrode serves as a cathode. A single electrolysis cell should ideally operate at a voltage between 2 and 2.5 V.

Further preferably said gas extraction tube extends through at least one of mentioned openings. Thus, said gas extraction tube is easily connected to a gas dosing valve or a combustion chamber.

In an advantageous embodiment said gas extraction tube extends in the void of said disc-shape structure. The gas extraction tube is primarily exposed in the void because it is only connected to one contact of the electrodes and does not contact any other portion of the electrolysis cell. The operating gas is gathered in the void and only the gas extraction tube allows it to leave the cavity.

In an advantageous embodiment a hydrophobic filter is arranged at the gas extraction tube. The hydrophobic filter ensures that no electrolyte leaves said cavity if there is a surplus of electrolyte in the gas generator. For example, filters made of sintered or expanded polytetrafluoroethylene (PTFE), polypropylene (PP) or polyethylene (PE) would be advantageous due its high hydrophobic properties.

In an advantageous embodiment said gas generator comprises at least one additional electrolysis cell, with a first electrode and a second electrode is arranged in said cavity, whereby said at least one additional electrolysis cell is connected in series with the electrolysis cell. This increases the required electrolysis voltage but also reduces the electrolysis current and thus the ohmic losses in the gas generator. The advantage is that the current can be halved for the same gas production rate and thus the ohmic resistance losses are smaller.

In an advantageous embodiment a non-conductive cell separator is arranged between the electrolysis cell and the at least one additional electrolysis cell. The technical effect of said advantageous embodiment is, that a series connection of multiple electrolysis cells is enabled due to the subdividing of the busbars such as that at least one busbar is bridging a cell separator.

In an advantageous embodiment the non-conductive cell separator is connected to a wick isolator for reducing bypassing currents. A series connection of multiple electrolysis cells inside one gas generator also leads to bypassing currents through the inter-cell water supply (wick structure) that reduce the gas production rate and degrade the gas production efficiency. The bypassing currents can be minimized by integrating one non-conductive wick isolator per cell separator into the wick structure such as the bypassing distance across two cells through the wick structure is elongated (and thus the bypassing resistance is increased). No counterflow occurs and electrolyte entrained with the gas flow additionally cools the electrolysis cell convectively.

According to a further aspect of the present disclosure, the object is achieved by a working tool comprising a gas generator according to one of the previous claims. A working tool comprising the above-mentioned gas generator operates constantly independent on its spatial orientation and has an increased gas production rate.

Further optional embodiments follow which can be combined or specified as desired with all previous embodiments of the first and second aspect and also with all further optional embodiments of the first and second aspect.

In another optional embodiment said gas extraction tube is connected to an opening of said cavity. Without any leakages, said gas extraction tube transports the operation gas from the cavity to a tool's combustion chamber.

Preferably said gas extraction tube is connected to an opening of one of a first electrode contact or of a second electrode contact. The operation gas is collected and compressed in the cavity and exhausted from the gas extraction tube through said opening of the first electrode contact or the second electrode contact. Said electrode contacts electrically contact respectively the first electrodes and the second electrode with an electric supplier, like said battery. Said electrode contacts make electrical connections with an electric supplier, such as said battery, to the first and second electrodes, respectively. The first electrode thus serves as an anode, and the second electrode serves as a cathode. A single electrolysis cell should ideally operate at a voltage between 2 and 2.5 V.

Further preferably said gas extraction tube extends through at least one of mentioned openings. Thus, said gas extraction tube is easily connected to a gas dosing valve or a combustion chamber.

This cavity includes a gas storage volume that serves as a pressure buffer for the gas dosing valve's intermittent gas demand. It also functions as a low-cost, portable, and small energy storage device for operations like the burst setting of a nail setting tool. The gas storage volume may also include the portion of the gas generator that is not entirely filled with the electrolyte in question.

In another optional embodiment said cavity comprises a length in at least one dimension and said gas extraction tube extends at least between one third and two thirds of the length of the cavity. Thus, the amount of electrolyte in the electrolysis cell is optimizable, and no leakage of the electrolyte during operation occurs.

Preferably said gas extraction tube extends less than 60 percent of the length of the cavity in said void. Thus, the operation gas is effectively transported out of said void and preventing any electrolyte leakage out of the gas generator. Preferably said gas extraction tube extends at least 40 percent of the length of the cavity in said void. Thus, the operation gas is ideally transported out of said void and preventing any electrolyte leakage out of the gas generator.

In another optional embodiment said non-conductive separator comprises a porous material, in particular a mesh, fabrics or nonwoven made of e.g., polypropylene (PP), polyphenylene sulfide (PPS) or polyether ether ketone (PEEK), which are treated to have a hydrophilic behaviour. The porous separator absorbs and distributes the electrolyte in the electrolysis cell by means of capillary action. Preferably said porous material is chemical resistant to concentrated additives, like KOH or NaOH. Alternatively, porous membranes made of polysulfone (PSU), polyethersulfone (PES) or polyphenylsulfone (PPSU), and composite membranes, for example membranes based on polysulfone (PSU) with inorganic fillers such as zirconium dioxide, aluminum oxide, titanium dioxide or barium sulfate may be used as non-conductive porous separator. Thus, the efficiency of the oxyhydrogen production in the electrolysis cell is stable. Oxygen gas at the cathode (hydrogen production) can lead to parasitic side reactions, so a certain gas tightness of the wetted separator membrane (bubble point test) is advantageous. This is preferably achieved by a good wettability as well as a maximum pore size of the separator membrane. Furthermore, a wicking effect of the separator membrane is advantageous to achieve a uniform distribution of the electrolyte in the cell.

In another optional embodiment said cavity comprises a refill opening for refill an electrolyte into said electrolysis cell. Thus, a permanent operation of the electrolysis cell is possible. Preferably said refill opening is connected to a liquid transport pump for transporting the water or electrolyte from a reservoir to said gas generator.

Preferably said refill opening is arranged at one of the first electrode contact or second electrode contact. Thus, said refill opening is arranged opposite to the inlet section of said gas extraction tube.

In another optional embodiment a housing is provided to assimilate said cavity at least partially. Said housing provides a mechanical protection for the electrolysis cell. Said housing may be a pressure vessel. Said pressure vessel needs to withstand the operation gas pressure and more important a pressure from an internal explosion of the oxyhydrogen gas without bursting of the housing. Said housing may comprise an insulation for insulating said housing from said electrode pair. Said insulation comprises a first insulation disc for the first electrode contact and a second insulation disc for the second electrode contact. The housing might have an insulating layer on the inside. Gaskets for a gas tight sealing of said cavity may be included in the housing.

Said housing is preferably arrangeable on a tool for providing an interchangeable gas generator. Thus, said gas generator is replaceable from a tool, e.g., for refilling the electrolyte in the electrolysis cell.

In another optional embodiment said gas generator comprises a pressure vessel. Said gas generator allows to produce pressurized operation gas because the operation gas is compressed by means of electrolysis. This is advantageous for buffering gas for intermittent demand. Additionally, this is advantageous for higher power density and efficiency in the combustion engine, where the gas is consumed. The voltage increases for internal compression in said electrolysis cell is max. 3-4% for 25 bar, 4-5% for 50 bar and 4-6% for 100 bar operation gas pressure. Alternatively, or additionally, a polymer electrolyte membrane (PEM) is used in said electrolysis cell to produce hydrogen and oxygen. The PEM may be introduced to overcome partial load issues, low current density, in the electrolysis cell.

In another optional embodiment the space between the busbars, the cell stack and the housing is fully filled with a non-conductive, porous wick structure, that distributes the water along the axis of the central hole between the individual separator sheets.

In another optional embodiment said gas generator, said at least one first protrusion connects the first electrode electrically with the first busbar and/or said at least one second protrusion connects the second electrode electrically with the second busbar. This leads to a good radial thermal conductivity.

By means of the following figures, the invention is explained in more detail by means of examples of embodiments. The list of references is part of the disclosure. Positional indications, such as "above", "below", "right" or "left" are in each case related to the corresponding embodiments and are not to be understood as restrictive. Indications, such as "first", "second", or "further" are in each case related to the corresponding device and are not to be understood as restrictive or enumeration.

### Brief Description of the Drawings

In order to facilitate better understanding of the present invention, reference is made below to the drawings. These show only exemplary embodiments of the subject matter of the invention. These embodiments, offered not to limit but only to exemplify and teach the invention, are shown and described in sufficient detail to enable those skilled in the art to implement or practice the invention. Thus, where appropriate to avoid obscuring the invention, the description may omit certain information known to those of skill in the art.

In the figures and the associated description, identical or functionally analogous parts are provided with the same reference numerals.

The invention also encompasses individual features shown in the figures, even if they are shown there in connection with other features and/or are not mentioned above. Further, the term "comprising" and derivatives thereof do not exclude other elements or steps. Likewise, the indefinite article "a" or "one" and derivatives thereof do not exclude a plurality. The functions of multiple features recited in the claims may be performed by a single unit. The terms "substantially", "approximately", "about" and the like in connection with a characteristic or a value define, in particular, also exactly the characteristic or exactly the value. All reference signs in the claims are not to be understood as limiting the scope of the claims.
Figure 1 shows a first embodiment of an electrolysis cell comprising a single cell in an explosion view.
Figure 2 shows a first embodiment of a sub assembly of an electrolysis cell in an explosion view.
Figure 3 shows a second embodiment of a sub assembly of an electrolysis cell in an explosion view.
Figure 4 shows a third embodiment of a sub assembly of an electrolysis cell in an explosion view.
Figure 5 shows a second embodiment of an electrolysis cell comprising three single electrolysis cells in an explosion view.
Figure 6 shows a first embodiment of the inventive gas generator without an electrolysis cell in a perspective view.
Figure 7 shows a first embodiment of the inventive gas generator in a perspective view.
Figure 8 shows an inventive working tool comprising a gas generator.

### Detailed Description

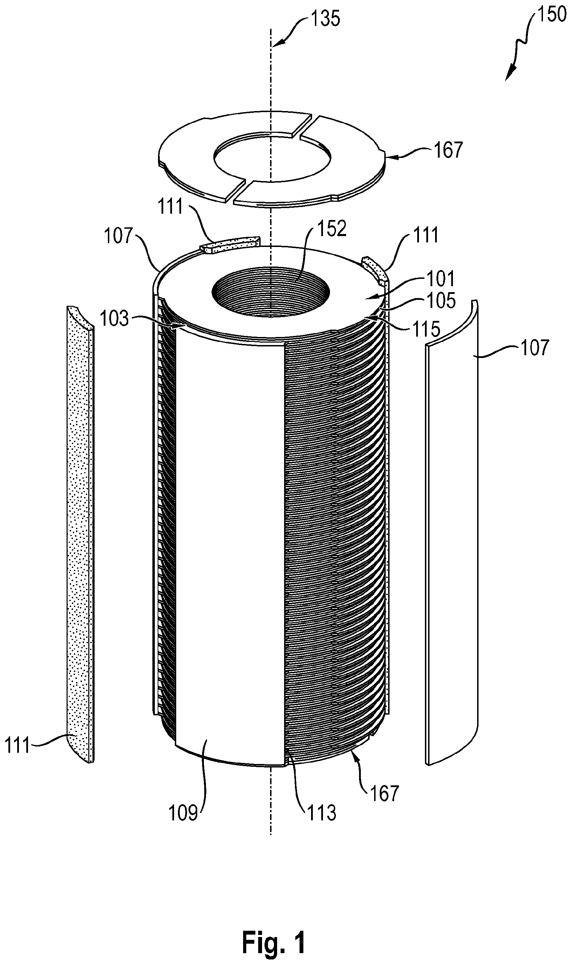

Figure 1 shows a first embodiment of an electrolysis cell comprising a single cell in an explosion view. Said electrolysis cell 150 comprises a large number of first electrodes 101 and a large number of second electrodes 103 connected in parallel. Said first electrodes 101 and said second electrodes 103 comprise a disc-shaped structure and form a stack, where said disc-shaped structure comprises a void 152 in the centre of its structure. Said first electrodes 101 comprise a first protrusion 115 and said second electrodes 103 comprise a second protrusion 113, so that the first electrodes 101 and the second electrodes 103 can be easily contacted with the first busbar 107 or said second busbar 109. The space between the first busbar 107 and the second busbar 109 is filled with a non-conductive porous wick 111.

In this embodiment the two first protrusions 115 extends radially along an outer diameter of the first electrode 101 and the two second protrusions 113 extends radially along an outer diameter of the second electrode 103. Said first protrusions 113 and the second protrusions 115 extends radially along an outer diameter with an angle of 60°, uniformly distributed around the circumference of the first electrode 101 and the second electrode 103. In this embodiment the first electrodes 101 and the second electrodes 103 in the stack are alternatingly rotated by 90° around the longitudinal axis 135 of the electrolysis cell 150 and each first electrode 101 is welded to two first busbars 107 (of total four busbars 107, 109). Each second electrode 103 is welded to two second busbars 109 (of total four busbars 107, 109), wherein the second second busbar 109 cannot be seen due to angle of view reasons.

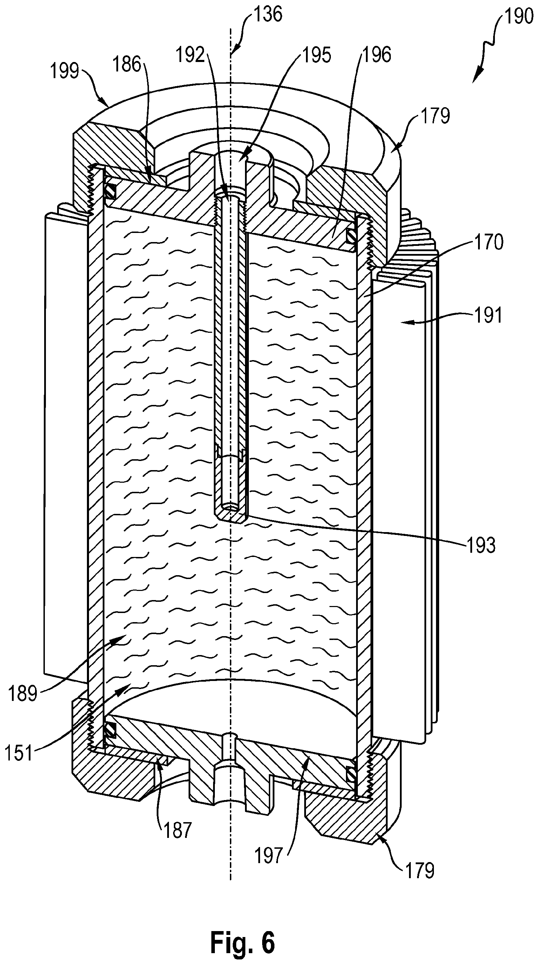

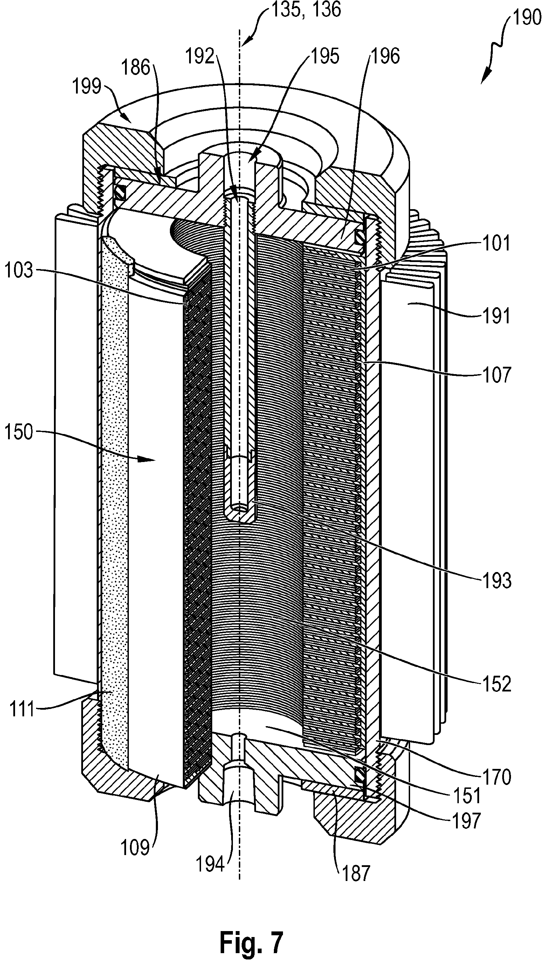

In this embodiment the two first busbars 107 are electrically connected to all first electrodes 101 and therefore form together the anode of the electrolysis cell 150. Said two first busbars 109 are electrically connected to all second electrodes 103 and therefore form together the cathode of the electrolysis cell 150. In this embodiment four wicks 111 and four busbars 107, 109 are for being in contact with an insulating layer 189 (shown in Figures 6 and 7) on the inner side of the housing tube 170 of the gas generator 190 shown in Figure 6 and 7. For reasons of better visibility only three of four wicks 111 are displayed in Figure 1. This arrangement results in a self-centering of the electrolysis cell 150 within the gas generator 190 and moreover provides an excellent heat conductivity from the electrodes 101, 103 to the busbars 107, 109 through the insulating layer 189 into the housing 199 the gas generator 190.

In this embodiment in total four flexible electrical connections 167 are both welded to the two first busbars 107 or two second busbars 109 and to the electrode contacts at the outlet 196, 197 (shown in Figures 6 and 7) to compensate for manufacturing tolerances and thermal expansion.

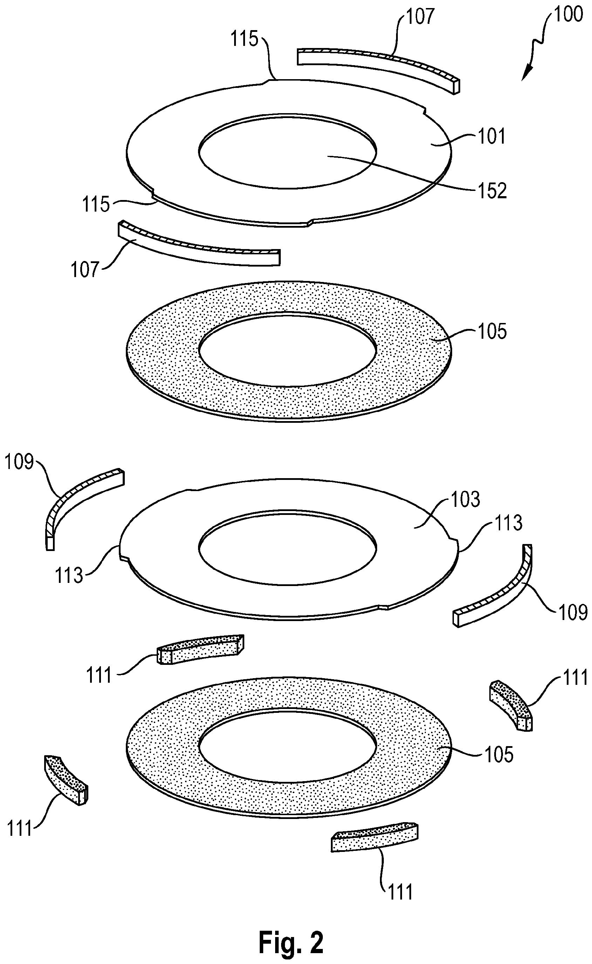

Figure 2 shows a first embodiment of a sub assembly of an electrolysis cell in an explosion view. The electrolysis cell 150 is the same as shown in Figure 1. Said sub assembly 100 of an electrolysis cell 150 comprises a first electrode 101 and a second electrode 103. Said first electrode 101 and said second electrode 103 comprise a disc-shaped structure and form a mini stack, where said disc-shaped structure comprises a void 152 in the centre of its structure. Said first electrode 101 comprises two protrusions 115 and said second electrode 103 comprises two second protrusions 113. In that way the first electrode 101 and the second electrode 103 can be easily contacted with said first busbar 107 and said second busbar 109 respectively. The space between the first busbar 107 and the second busbar 109 is filled with a non-conductive porous wick 111.

Said non-conductive porous wicks 111 connect all the two non-conductive, porous separators 105 of this embodiment in that way, that the wicks 111 distributes the electrolyte to the two electrically non-conductive, porous separators 105. Said non-conductive, porous separators 105 are placed before and after the first electrode 101 and the second electrode 103.

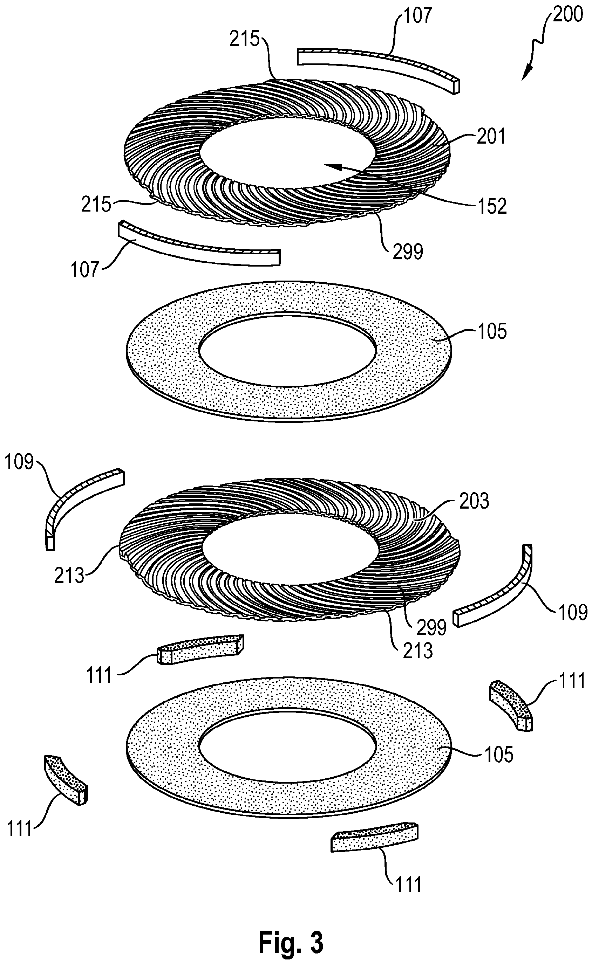

Figure 3 shows a second embodiment of a sub assembly of an electrolysis cell in an explosion view. Said sub assembly 200 of an electrolysis cell can be comprised by an electrolysis cell 150 as the same as shown in Figure 1. Said sub assembly 200 of an electrolysis cell comprises a first electrode 201 and a second electrode 203. Said first electrode 201 and said second electrode 203 comprise a disc-shaped structure and form a mini stack, where said disc-shaped structure comprises a void 152 in the centre of its structure. Said first electrode 201 comprises two protrusions 215 and said second electrode 203 comprises two second protrusions 213. In that way the first electrode 201 and the second electrode 203 can be easily contacted with said first busbar 107 and said second busbar 109 respectively. The space between the first busbar 107 and the second busbar 109 is filled with a non-conductive porous wick 111.

Said non-conductive porous wicks 111 connect all the two non-conductive, porous separators 105 of this embodiment in that way, that the wicks 111 distributes the electrolyte to the two electrically non-conductive, porous separators 105. Said non-conductive, porous separators 105 are placed before and after the first electrode 201 and the second electrode 203.

Compared to Figure 2 the embodiment of Figure 3 comprises an involute groove structure 299 on the surface of the first electrodes 201 and the second electrodes 203.

Said involute groove structure 299 leads to a channelling of generated gas bubbles at the first electrodes 201 and 203. The area between the involute groove structure 299 remains available for electrolysis.

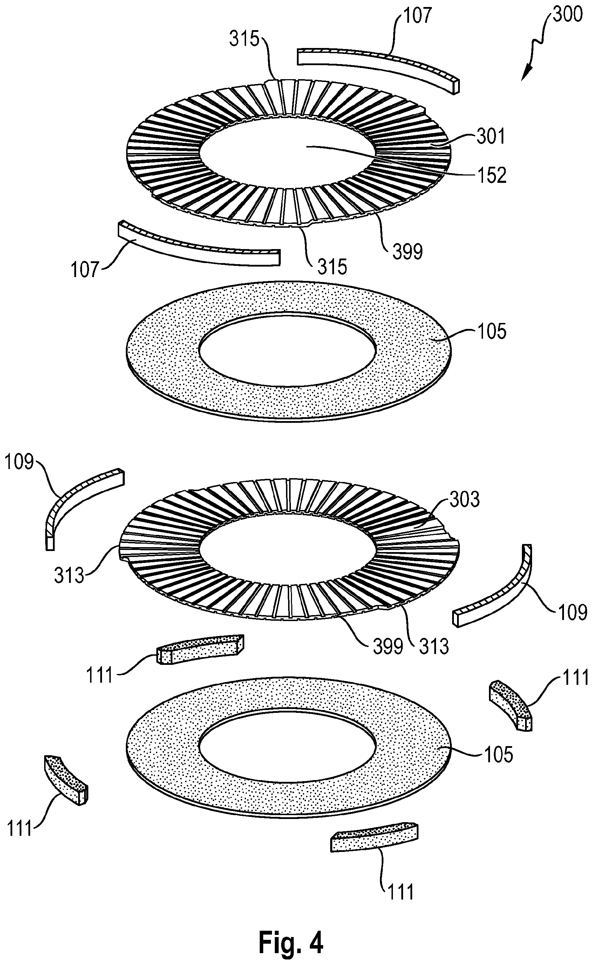

Figure 4 shows a third embodiment of a sub assembly of an electrolysis cell in an explosion view. Said sub assembly 300 of an electrolysis cell can be comprised by an electrolysis cell 150 as the same as shown in Figure 1. Said sub assembly 300 of an electrolysis cell comprises a first electrode 301 and a second electrode 303. Said first electrode 301 and said second electrode 303 comprise a disc-shaped structure and form a mini stack, where said disc-shaped structure comprises a void 152 in the centre of its structure. Said first electrode 301 comprises two protrusions 315 and said second electrode 303 comprises two second protrusions 313. In that way the first electrode 301 and the second electrode 303 can be easily contacted with said first busbar 107 and said second busbar 109 respectively. The space between the first busbar 107 and the second busbar 109 is filled with a non-conductive porous wick 111.

Said non-conductive porous wicks 111 connect all the two non-conductive, porous separators 105 of this embodiment in that way, that the wicks 111 distributes the electrolyte to the two electrically non-conductive, porous separators 105. Said non-conductive, porous separators 105 are placed before and after the first electrode 301 and the second electrode 303.

Compared to Figure 2 and Figure 3 the embodiment of Figure 4 comprises a radial groove structure 399 on the surface of the first electrodes 301 and the second electrodes 303. Said radial groove structure 399 leads to a channelling of generated gas bubbles at the first electrodes 301 and 303. The area between the radial grooved structure 399 remains available for electrolysis.

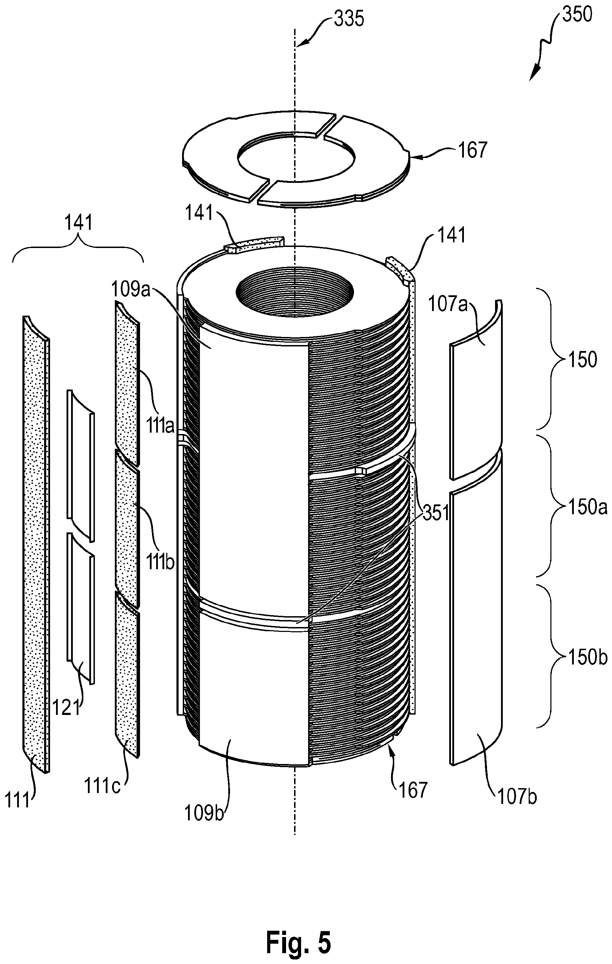

Figure 5 shows a further embodiment of an inventive electrolysis cell comprising three single electrolysis cells in an explosion view. Compared to the electrolysis cell of Figure 1, said electrolysis cell 350 additionally comprises two additional electrolysis cells 150a and 150b. The three electrolysis cells 150, 150a, 150b are connected in series to each other. Said two additional electrolysis cells 150a, 150b are equally constructed as said electrolysis cell 150. To reduce bypassing currents, a non-conductive cell separator 351 is placed between the electrolysis cell 150 and the first additional electrolysis cell 150a as well as between the first additional electrolysis cell 150a and the second additional electrolysis cell 150b. The non-conductive cell separator 351 leads to a separation of the first busbars 107 into the first sub-busbars 107a and 107b. and to a separation of the second busbars 109 into the second sub-busbars 109a and 109b. Moreover, the wick 111 is extended to a wick structure 141 which also comprises two wick isolator 121 and three sub-wicks 111a, 111b and 111c for elongating the bypassing distance across the electrolysis cells 150 and 150a as well as the electrolysis cells 150a and 150b. In this way the bypassing resistance is increased and this results in reduced bypassing currents.

In this embodiment in total four flexible electrical connections 167 are both welded to the two first busbars 107a or two second busbars 109b and to the electrode contacts at the outlet 196, 197 (shown in Figures 6 and 7) to compensate for manufacturing tolerances and thermal expansion.

Figure 6 shows a first embodiment of the inventive gas generator without an electrolysis cell in a perspective view. The gas generator 190 comprises a housing 199. The housing 199 comprises two end caps 179 and a housing tube 170. Said housing tube 170 comprises a cavity 151 for positioning an electrolysis cell.

Said gas generator 190 comprises an electrode contact at the outlet 196 of the gas generator 190 and an electrode contact at the inlet 197 of the gas generator 190. The electrode contacts 196, 197 electrically connect the gas generator housing 199 to an electrolysis cell (see Figure 7).

Said housing 199 comprises an insulation for insulating said housing 199 from the electrodes of an electrolysis cell. Said insulation comprises a first insulation disc 187 adjacent to the electrode contact at the inlet 197 and a second insulation disc 186 adjacent to the electrode contact at the outlet 197. Said housing tube 170 comprises an insulating layer 189 (wave hatching) on the inner side of the housing tube 170.

Said gas generator 190 further comprises a cooling fin arrangement 191 which is directly connected to the housing tube 170 of said gas generator 190. In this way, the cooling of the gas generator is enhanced.

Said gas generator 190 comprises a gas extraction tube 192, which is arranged in the cavity 151 of the housing tube 170. Said gas extraction tube 192 is connected to an opening 195 of said electrode contact at the outlet 196. Said gas extraction tube 192 is only connected with said electrode contact at the outlet 196 so that the gas extraction tube 192 is mostly exposed in the void 152 of an electrolysis cell (not shown). The hydrophobic filter 193 ensures that no electrolyte leaves the electrolytic cell if there is a surplus of electrolyte in the gas generator 190.

Figure 7 shows an inventive gas generator 190 for a working tool comprising an electrolysis cell 150 in a cavity 151, an electrode pair with a first electrode 101 and a second electrode 103. Said first electrode 101 and said second electrode 103 comprise both a disc-shaped structure and form a stack in the cavity 151 of the housing tube 170, where the disc-shaped structure comprises a void 152 in the centre of the disc-shape structure. Said first electrode 101 and said second electrode 103 are separated by a non-conductive, porous separator 105 in said hollow cavity 151. The first electrodes 101 are electrically connected to the first busbar 107 and the second electrodes 103 are electrically connected to the second busbar 109. The first busbar and 107 and the second busbar 109 are electrically connected to an electrode contact at the outlet 196 of the gas generator and to an electrode contact at the inlet 197 of the gas generator.

Said electrodes 101, 103 respectively are contacted with the electrode contacts 196, 197. Said electrode contacts 196, 197 are connected to an electric supplier, here a battery (not shown in Fig. 7). When electrically contacted via a wiring (not shown in Fig. 7), said first electrodes 101 and said first busbar 107 provide an anode and said second electrodes 103 and said second busbar 109 provide a cathode. Said cavity 151 is at least partially filled with water comprising KOH (potassium hydroxide) as an additive, as a liquid electrolyte. Said additive stays in said electrolysis cell 150, while said water is refilled occasionally. The electrically contacted electrodes 101, 103 produce oxyhydrogen as an operation gas by electrolysis, which moves in the direction of the void 152. Said electrode contact at the inlet 197 comprises a refill opening 194 for refill water into said electrolysis cell 150.

Said electrodes 101, 103 are metal sheets, made of nickel. Said non-conductive separators 105 comprise a porous material, namely a porous membrane made of polyethersulfone (PES). Alternative materials to said electrodes 101, 103 or non-conductive separators 105 are mentioned above.

Said electrolysis cell 150 comprises a gas extraction tube 192, which is arranged in the cavity 151. Said gas extraction tube 192 is connected to an opening 195 of said electrode contact at the outlet 196. Said gas extraction tube 192 is only connected with said electrode contact at the outlet 196 and does not contact another part of the electrolysis cell 150, so that the gas extraction tube 192 is mostly exposed in the void 152. The operating gas (not shown in Fig. 7) is collected in the void 152 and exits the cavity 151 exclusively through the gas extraction tube 192.

Said gas generator 190 comprises a housing 199 to cover said cavity 151. Said housing 199 comprises an insulation for insulating said housing 199 from the first electrodes 101 and the second electrodes 103 of the electrolysis cell 150. Said insulation comprises a first insulation disc 187 adjacent to the electrode contact at the inlet 197 and a second insulation disc 186 adjacent to the electrode contact at the outlet 196. Said housing tube 170 comprises an insulating layer 189 on the inner side of the housing tube 170

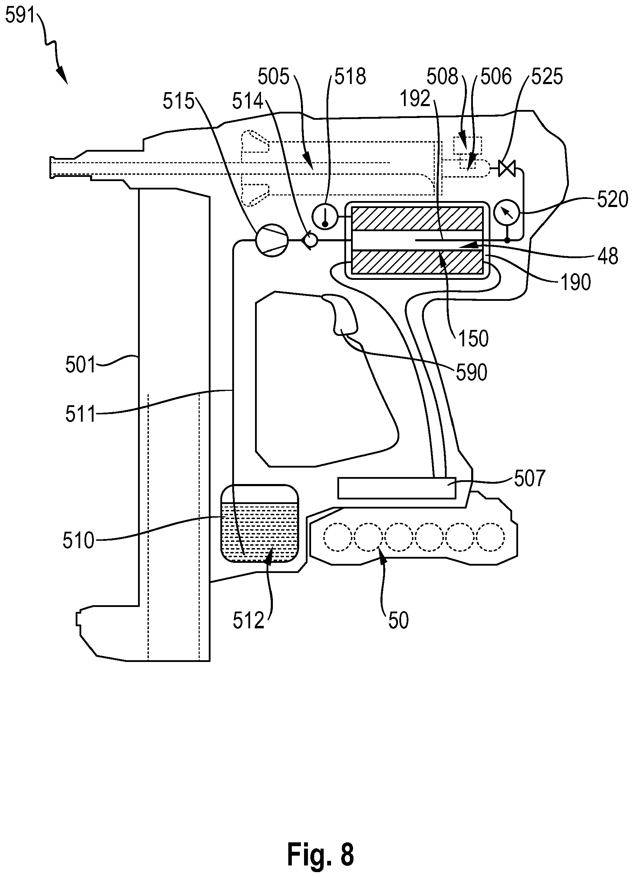

Figure 8 shows a gas generator according to this invention, for example the above-described gas generator 190, arranged in a working tool 591, especially in a handheld nail-setting tool. Said working tool 591 comprises a tool housing 501 with a moveable tooling 505, and one of said gas generators 190 for operating the moveable tooling 505. E.g., said gas generator 190 is arranged at the tool housing 501 and comprises at least one electrolysis cell 150 for generating said oxyhydrogen as operation gas 48. In addition, a temperature measurement device 518 is provided for measuring the temperature on said electrolysis cell 150. Said working tool 591 comprises a water reservoir 510 for storing water 512. Said water reservoir 510 is connected via pipes 511 with a pump 515 for transporting said water 512 into the electrolysis cell 150. Said electrolysis cell 150 comprises water with KOH as an additive as the electrolyte. In addition, a check valve 514 is connected in between to avoid backflow. Said gas generator 190 comprises said gas extraction tube 192 as mentioned above. Said gas extraction tube 192 is connected to a gas pressure measurement device 520, which is provided for measuring said gas pressure of the operating gas 48.

Said gas extraction tube 192 is further connected to a dosing valve 525 for dosing said operating gas 48 extending out of the at least one electrolysis cell 150. By controlling a valve opening interval, said amount of operation gas 48 leading into a combustion chamber 506 of the moveable tooling 505 is controlled.

Said tool 591 comprises a power electric circuit 507, which is connected to said energy supplier 50. Said power electric circuit is configured to control an ignition device 508 for ignition of the operation gas 48 in the combustion chamber 506 depending on the operation of said dosing valve and is connected to the pressure measurement device 520 and the temperature measurement device 518. Said tool 591 is triggered by pulling the trigger 590.

## Claims

1. Gas generator for a working tool, comprising an electrolysis cell, an electrolyte, a first electrode and a second electrode, said first electrode and said second electrode are separated by at least one electrically non-conductive separator, **characterized in that,** the at least one electrically non-conductive separator is connected to a wick and the first electrode is connected to a first busbar and the second electrode is connected to a second busbar.

2. Gas generator according to the previous claim, **characterized in that,** said wick is non-conductive and porous and distributes the electrolyte to the at least one electrically non-conductive separator.

3. Gas generator according to one of the previous claims, **characterized in that,** said first electrode and said second electrode comprise a disc-shaped structure and form a stack in a cavity of the gas generator, where said disc-shaped structure comprises a void in the centre of its structure.

4. Gas generator according to one of the previous claims, **characterized in that,** said first busbar is electrically connected to the first electrode, wherein the first busbar and the first electrode form an anode and said second busbar is electrically connected to the second electrode, wherein the second busbar and the second electrode form a cathode.

5. Gas generator according to one of the previous claims, **characterized in that,** said first electrode comprises at least one first protrusion and said second electrode comprises at least one second protrusion.

6. Gas generator according to the previous claim, **characterized in that,** said at least one first protrusion extends radially along an outer diameter of the first electrode and said at least one second protrusion extends radially along an outer diameter of the second electrode, wherein the first protrusion and the second protrusion extends radially along an outer diameter with an angle of at least of:
a. 44°
b. 50°
c. 55°
d. 60°
e. 65°
f. 70°
g. 75°
h. 80°
i. 85°
j. 89°

7. Gas generator according to claims 5 to 6, **characterized in that,** said at least one first protrusion and said at least one second protrusion do not overlap along a longitudinal axis of the electrolysis cell.

8. Gas generator according to one of the previous claims, **characterized in that,** said first electrode and/or said second electrode comprises an involute groove structure or a radial groove structure.

9. Gas generator according to one of the previous claims, **characterized in that,** said cavity comprises a gas extraction tube.

10. Gas generator according to claim 3 to 9, **characterized in that,** said gas extraction tube extends in the void of said disc-shape structure.

11. Gas generator according to claims 9 to 10, **characterized in that,** a hydrophobic filter is arranged at the gas extraction tube.

12. Gas generator according to one of the previous claims, **characterized in that,** at least one additional electrolysis cell, with a first electrode and a second electrode is arranged in said cavity, whereby said at least one additional electrolysis cell is connected in series with the electrolysis cell.

13. Gas generator according to claim 12, **characterized in that,** a non-conductive cell separator is arranged between the electrolysis cell and the at least one additional electrolysis cell.

14. Gas generator according to claim 13, **characterized in that,** the non-conductive cell separator is connected to a wick isolator for reducing bypassing currents.

15. Working tool, comprising a gas generator according to one of the previous claims.
